# EUROPEAN PATENT APPLICATION

(11) **EP 4 252 954 A1**
(43) Date of publication of application: **04.10.2023**
(21) Application number: 23160991.8
(22) Date of filing: 09.03.2023
(51) Int. Cl.: B23K 26/08, B23K 26/38, B23K 26/40, B23K 26/362, B23K 26/03, B23K 26/0622, B23K 26/06

(54) **LASER CLEANING OF OXIDIZED PARTS**

(30) Priority: 11.03.2022 US 202217692789
(71) Applicant: ATS Industrial Automation Inc., Cambridge Ontario N3H 4R7 (CA)
(72) Inventor: THAYER, John Benjamin, Cambridge, N3H 4R7 (CA); FARROW, Gregory John, Cambridge, N3H 4R7 (CA)
(74) Representative: Valua

(57) **Abstract**

A system (10) for cleaning an oxide layer from an exterior surface of a base metal of a metal part (8), the system comprising: a laser system (1) for projecting a laser beam (13) onto an oxide surface of the oxide layer, the oxide layer formed on the exterior surface; a rotary system (5) for rotating the metal part (8) about an axis, the rotary system (5) having a holder (6) for holding the metal part (8) adjacent to the laser system (1); and a control system (11) for controlling a plurality of parameters for facilitating an ablation of the oxide layer from the exterior surface as the metal part (8) is rotated about the axis by the rotary system (5).

## Description

### TECHNICAL FIELD

The present invention relates to the technical field of oxide material removal using laser.

### BACKGROUND

Current oxide removal processes to clean oxidized metal parts, such as metal tubes, involves a method of using abrasive materials positioned adjacent to the metal part and then moving the abrasive material and/or the metal part in order to abrade the oxide present on the outer surface of the metal part (e.g. using sand paper or abrasive pads). Unfortunately, using the abrasive pads can cause a number of disadvantageous results, such as damage to the base metal of the part due to tool degradation, generating base metal swarf (e.g. production of small chips or other particles of the base metal) caused by mechanical removal of material, and foreign material deposits onto the metal part such as abrasive pad dust.

The use of laser systems to remove material from a solid surface, (known as laser ablation), is currently being applied in a vast number of manufacturing fields including surface cleaning, surface preparation, paint removal, rust removal and removing insulation on electric conductors. Since laser ablation uses very short laser pulses, it can remove the target material while minimizing damage to the surrounding material. The laser system is non-contact and thus not subject to mechanical wear. However, current problems exist in use of laser systems for cleaning of metal parts, including overheating of base metal, depositing of further oxide material top the base metal, incomplete removal of oxide layer from the base metal, removal of existing base metal surface texture (e.g. removal of peaks and valleys of the base metal underlying the oxide layer), and modifying the grain structure and other material properties of the base metal.

### SUMMARY

An object of the present invention is to provide a laser system and method to obviate or mitigate at least one of the above-presented disadvantages.

An aspect provided is a system for cleaning an oxide layer from an exterior surface of a base metal of a metal part, the system comprising: a laser system for projecting a laser beam onto an oxide surface of the oxide layer, the oxide layer formed on the exterior surface; a rotary system for rotating the metal part about an axis, the rotary system having a holder for holding the metal part adjacent to the laser system; and a control system for controlling a plurality of parameters for facilitating an ablation of the oxide layer from the exterior surface as the metal part is rotated about the axis by the rotary system.

A second aspect provided is a method for cleaning an oxide layer from an exterior surface of a base metal of a metal part, the method comprising: mounting a metal part in a rotary system, the rotary system positioned adjacent to a laser system and having a holder for holding the metal part, the laser system for projecting a laser beam onto an oxide surface of the oxide layer, the oxide layer formed on the exterior surface; instructing the rotary system to rotate the metal part about an axis; and controlling a plurality of parameters in order to ablate the oxide layer from the exterior surface as the metal part is rotated about the axis by the rotary system.

### BRIEF DESCRIPTION OF DRAWINGS

FIG. 1 is a schematic view of a cleaning system for a metal part;
FIG. 2 is an end view of an example metal part of Figure 1;
FIG. 3 is side cross sectional view of the metal part of Figure 2;
FIG. 4 is a perspective view of a mounted metal part in a rotary system of Figure 1;
FIG. 5 is an example diagram of multiple successive positions of the laser on a metal part of Figure 1;
FIG. 6 is a block diagram of an example embodiment of the control system of Figure 1;
FIG. 7a,b are example parameters of the system of Figure 1;
FIG. 8 is a block diagram of an example operation of the system of Figure 1;
FIG. 9 is a top view showing a test coupon for use in calculating the laser system of Figure 1;
FIG. 10 is an example cleaning result of the operation of Figure 8;
FIG. 11 is a further example cleaning result of the operation of Figure 8; and
FIGs. 12a,b,c are example states of the metal part during the operation of Figure 8.

### DETAILED DESCRIPTION

To make the technical issues to be addressed, the technical solutions adopted and the technical effects achieved more clear, the technical solutions are further described hereinafter through embodiments in conjunction with drawings. It is to be understood that the embodiments set forth below are intended to illustrate rather than limiting.

In the description, unless otherwise expressly specified and limited, the terms "mounted", "connected", or "coupled" are to be construed in a broad sense, for example, as permanently connected, detachably connected, or integrated; mechanically connected or electrically connected; directly connected to each other or indirectly connected to each other via an intermediary; or internally connection of two components or interaction between two components. For those of ordinary skill in the art, specific meanings of the preceding terms in the present utility model may be construed based on specific situations.

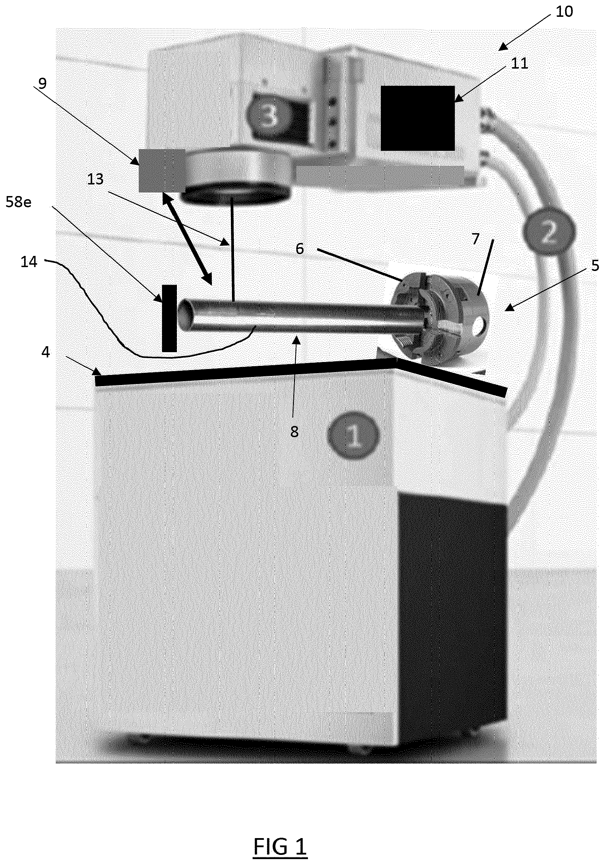

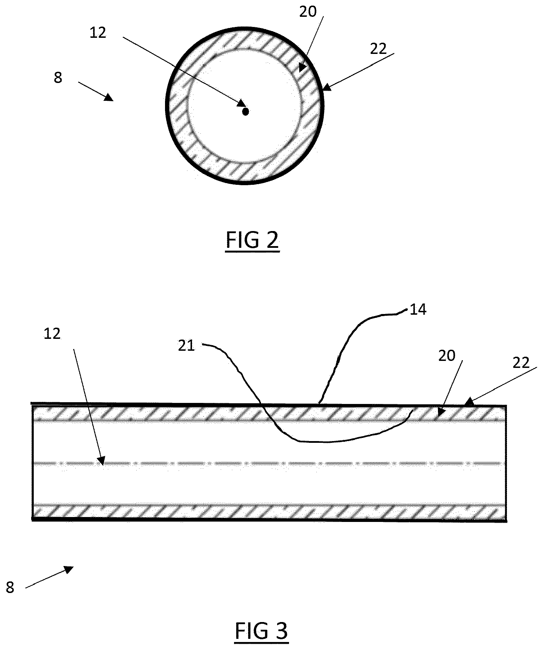

Referring to Figure 1, shown is a laser cleaning system 10 with laser source 1, a laser fiber optic cable 2 and laser beam delivery optics 3, as well as a control system 11 for operating a laser beam 13, as further described below. A table 4 can be positioned over the laser source 1, such that the table 4 provides a mounting surface for a rotary system 5 (e.g. a chuck 6 or holder and a motor 7 - shown illustratively by example) for rotating a metal part 8 connected to the rotary system 5 (e.g. clamped by the chuck 6). The rotary system 5 rotates about an axis 12 (see Figures 2,3) of the metal part 8, in order to iteratively and progressively expose a section of an exterior surface 14, positioned adjacent to the laser beam delivery optics 3, to the laser beam 13 projected onto the exterior surface 14 (as the metal part 8 rotates). One example of the base metal 20 is zirconium and the oxide layer 22 is zirconium oxide. It is recognised that the laser system 10 and rotary system 5 could be incorporated as part of a larger assembly process for manufacturing, cleaning (removing any accumulated oxide layer 22 during manufacture) and then assembling the metal parts 20 (e.g. welding ablated portions 40 - see Figure 3 to one other or to other components of a larger system - not shown), as desired.

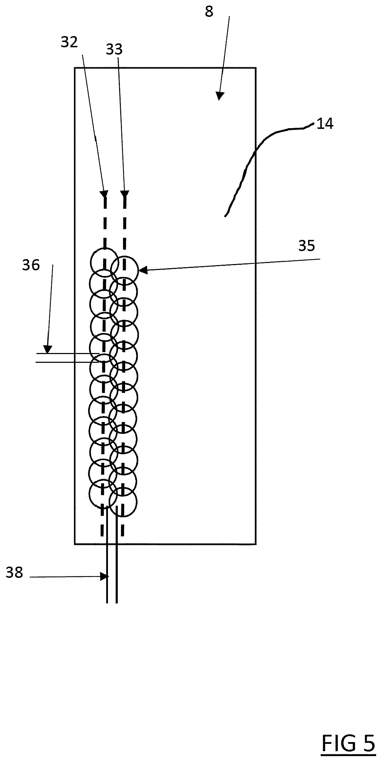

Advantages of using the laser system 10 (laser ablation uses very short laser pulses of a predetermined pulse duration) for cleaning the metal parts 10 can include: removal of the target material (e.g. oxide layer 22) without damaging the surrounding material (e.g. base metal 20); straightforward setup as the laser point position (e.g. positions 35 - see Figure 5) is programmable in the control system 11 and thus setup changes can be done through programming; laser systems 10 are repeatable as the laser system 11 is non-contact with the metal part 8 and thus not subject to appreciable mechanical wear; inhibiting metal part 8 (e.g. tube) damage caused by tool degradation; inhibiting metal swarf caused by mechanical process removal of material; and inhibiting foreign material deposits caused by mechanical abrasion.

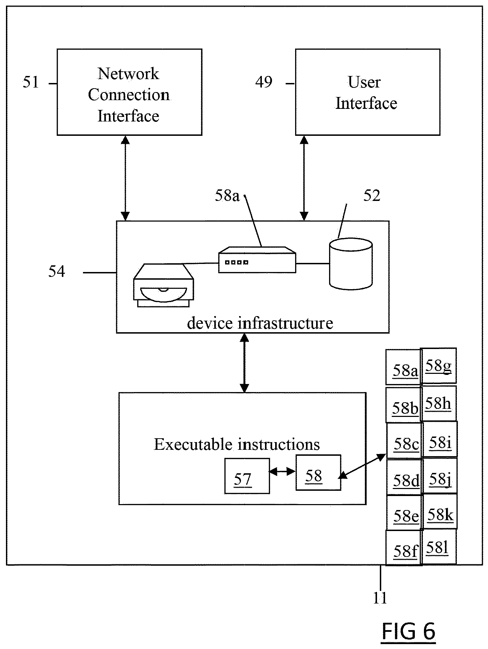

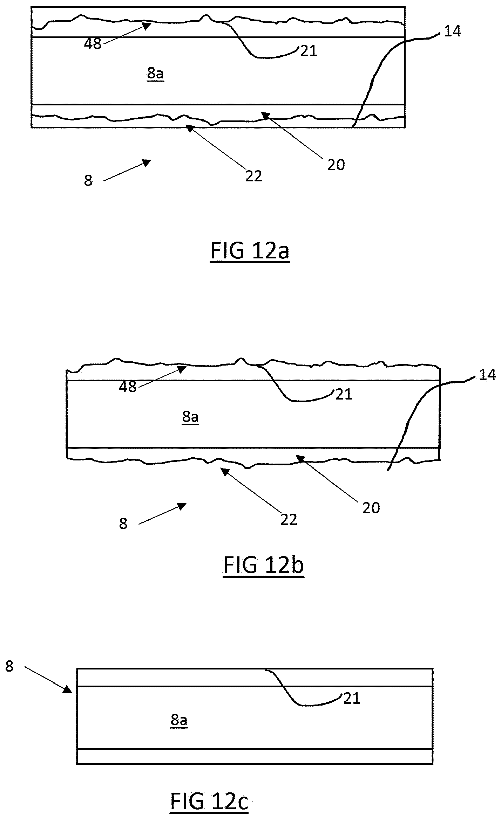

Referring to Figures 2 and 3, shown (not to scale) is an example metal part 8 (e.g. of circular cross section) having a base metal 20 body and an oxide layer 22 deposited on an exterior base surface 21 of the base metal 20. It is recognised that the oxide layer 22 is oxidation of the base metal 20. As such, the exterior surface 14 can also be referred to as an oxide surface 14. As further described below, the laser system is operated by the control system 11, in order to progressively position the laser beam 13 over the oxide surface 14 and thus ablate the oxide layer 22 off of the base metal 20, while at the same time inhibiting ablation of the base metal 20 itself, as further discussed below. It is recognised that the cross sectional shape of the metal part 8 can be other than circular (e.g. oval, square, etc.), so long as focusing of the laser beam 13 on the oxide surface 14 by the control system 11 results in appropriate ablation of the oxide layer 22, as further described below. For example, the type and degree of the oxide layer 22 can be determined by the color of the oxide layer 22 (e.g. stainless steel base metal can have different oxide layer 22 types, such as but not limited to yellow, blue and dark grey). As such, the metal part 8 can be checked for type 58a of oxide layer 22, as one of the parameters 58 - see Figure 6, which could be dependent upon the base metal and color properties exhibited by the respective oxide layer. Further, it can be provided that one type 58a of the oxide layer 22 can be the seeming absence of the layer 14, i.e. a polished metal part 8 such that surface 21 texture 48 has been removed (or otherwise reduced) via ablation of the base metal 20), see Figures 12a,b. It is recognized that Zirconium is another type of base metal, as desired.

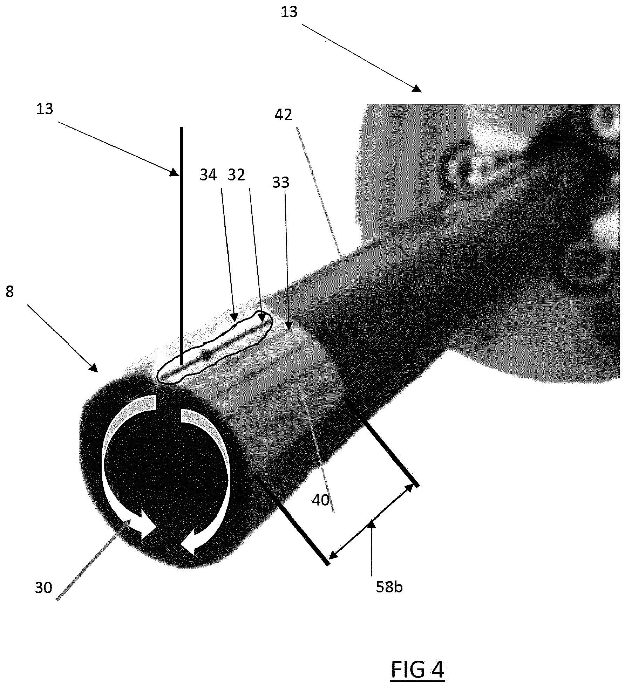

Referring to Figures 1, 2 and 4, shown is an operational example of the rotary system 5 and the laser beam 13, in conjunction with the metal part 8. For example, rotation direction(s) 30 about the axis 12 of the metal part 8 can be performed by the rotary system 5, as directed by the control system 11. Further, the control system 11 can also direct the placement of the laser beam 13 successively along ablation path 32 (e.g. directions) along the axis 12, such that previous (or next) ablation paths 33 are also shown. For example, the laser beam 13 would first be scanned along ablation path 33 and the metal part 8 is rotated in direction 30 and then the laser beam 13 is then scanned also ablation path 32, and so on. It is recognised that the paths 32, 33 can be linear as shown or can be other than shown (e.g. curvilinear), as desired. It is noted that the metal part 8 of Figure 4 has an ablated portion 40 (in which removal of the oxide layer 22 has occurred) and has a non-ablated portion 42 (in which the oxide layer 22 remains present). Also shown, is an oxide ablation region 34 for the laser beam 13, such that the ablation region 34 projects to either side of the ablation path 32 (as the laser beam 13 is scanned along the ablation path 32). As further described below, adjacent ablation regions 34 have overlap 38, and individual positions / locations 35 of the laser beam 13 overlap 36 to comprise each ablation region 34.

Referring to Figure 5, shown is an exemplary view of paths 32, 33 with successively applied (e.g. by the control system 11) laser beam positions 35 (e.g. a circular region in which the laser beam 13 is focused by the control system 11 onto the oxide surface 14), as the laser head 3 is operated by the control system 11 to scan the laser beam 13 along each path 32. It should be noted that the control system 11 implements overlap 36 between adjacent positions 35 along the same path 32 as well as implements overlap 38 between adjacent positions 35 on different paths 32, 33. These overlaps 36, 38 can be used by the system to control the degree of ablation of the oxide layer 22, while at the same time inhibiting the melting or removal (e.g. ablation) of the base metal 20. Further, these overlaps 36, 38 are also used by the control system 11 to inhibit a material property change (e.g. grain size) in the base metal 20, which could occur if a region of the base metal 20 were subjected to a level of heating (by the laser beam 13) which exceeded a set grain temperature limit (recognizing that undue heat treatment by the laser beam 13 can alter the microstructure and mechanical properties of base metal 20). Further, these overlaps 36,38 can also used by the control system 11 to inhibit overheating in the base metal 20, which could result in an undesirable depositing of an additional oxide layer 22 onto the exterior surface 21 (see Figure 1), rather than desirably ablating the existing oxide layer 22 and thus leaving the desired ablated portions 40. It is recognised that the overlaps 36, 38 can be of uniform size / thickness relatively between adjacent pairs of positions 35. Alternatively, the width / degree of the overlaps 36, 38 can vary between pairs of positions 35 and / or between adjacent paths 32, 33. As such, it is recognised that the dimension(s) of the overlaps 36, 38 can be to within a set tolerance or range (e.g. +/- 10% of the width of the laser beam 13, for example). It is recognised that the dimension(s) of the overlaps 36, 38 would depend upon the other parameters 58 as specified to or otherwise selected by the control system 11.

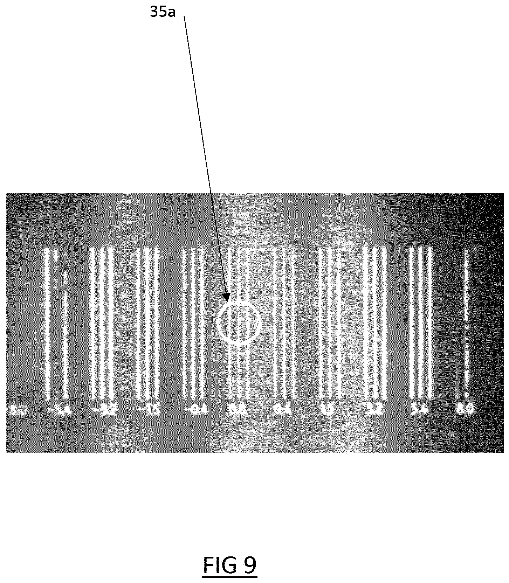

Referring to Figure 6, shown is an exemplary block diagram of the control system 11, having a system infrastructure 54 with a memory 52 for storing a set of executable instructions 57 associated with a set of parameters 58. The parameters 58 provide operational values of various functions of the laser system 10 and rotary system 5, as further explained below. One parameter 58 can be a scan length 58b (see Figure 3 - e.g. 20mm measured from the metal part 8 tube end). Another parameter 58 can be a cycle time 58c, representing the total time the laser beam 13 is scanned over the non-ablated portion 42 to result in the ablated portion 40 (of the requisite length 58b and thus containing all the predetermined paths 32,33 as performed by the control system 11). Further parameters 58, as further described below, can include a focal distance 58d (see Figure 9 for an example calibration of parameter 58d as a focal position offset for determining a beam size 35a, which is then positioned at each of the positions 35 as the laser beam 13 is scanned along the respective path 32,33). For example, functionally, the metal part 8 position is correlated with respect to the laser systems coordinate frame. For example, a hard stop 58e position can be positioned on the table 4 (e.g. X-Y table - see Figure 1), in order to calibrate a position of an end of the metal part 8 in relation to the position of the laser system 10. Also, the geometrical shape / configuration 58g of the metal part 8 (e.g. the dimensions of the periphery such as oval, circular, etc.) can be a set parameter 58. In other words, based on the parameter 58g, the distance of the exterior surface 14 from the axis 12 can be specified (e.g. constant in the case of a circular cross section).

Further parameters 58 (e.g. predefined for a selected type 58a and geometrical configuration 58g of the metal part 8) can include, as programed for the control system 10: rotary speed 58f (determines a rate at which untreated oxide later 14 is presented to the laser beam 13 point (e.g. successive positions 35 - see Figure 5, which helps define the overlap 38); scan speed 58h (determines the speed the laser beam 13 point travels along the path 32, 33 of the tube, helps to determine the overlap 36 of pulses such that the faster the scan speed 58h the smaller the overlap 36 between pulses/positions 35); pulse frequency 58i (helps to determine the overlap 36 of pulses, the higher the frequency, the faster laser beam 13 points are produced and thus the greater the overlap 36); average power 58j (dictates the rate of energy used and thus applied by the laser beam 13 at each position 35 during the cleaning; used in combination with laser on time and pulse frequency to determine peak power per pulse at each location 35 as well as in each overlap 36, 38 location - recognizing that each overlap region can have residual heat obtained from previous pulse(s) as well as the current pulse; the peak power per pulse and spot size of the laser beam 13 determines the power density at each location/position 35, such that ablation of the oxide layer 22 is understood to occur at a set particular power density for which the vaporization threshold of the oxide material has been reached); pulse time 58k (length of time the laser source 1 is on per pulse); and defocus 58I (determines the spot size and thus power density of the laser beam 13 at a particular location/position 35; the more in focus results in the higher the power density and smaller spot size; the more out of focus results in a relatively larger the spot size and thus a larger the coverage area per pulse).

It is recognised that if the power density at a particular location 35 (as well as in the overlaps 36,38) reaches the vaporization threshold of the oxide layer 22 then the oxide layer would be ablated off the base metal 20, leaving the minimally affected exterior surface 21 of the base metal 20. Alternatively, if the vaporization threshold of the oxide layer 22 is not reached, then the oxide layer 22 would not fully ablate off the exterior surface 21. Alternatively, if the vaporization threshold of the oxide layer 22 is exceeded (e.g. the metal part 8 is overheated), then an undesirable additional oxide layer (not shown) can be deposited on top of the exterior surface 21 (thus thickening the oxide layer 22 or thus depositing a new oxide layer 22 once the original oxide layer 22 was removed). Further, if the vaporization threshold of the oxide layer 22 is exceeded (e.g. the metal part 8 is overheated), then the base metal 20 itself can be ablated (thus reducing the surface texture of the exterior surface 21) and/or the base metal 20 can be heat treated and thus undesirably affect the material properties of the base metal 20. The result of exceeding the vaporization threshold will dictate the undesirable results produced by the laser beam 13 heating, as discussed above.

In view of the above, the various parameters 58 are combined by the control system 11, for a selected metal part 8, in order to achieve a power density threshold for the oxide layer 22 in order to result in sublimation (e.g. ablation) of the oxide layer 22 off of the base metal 20. It is recognised that the spot (e.g. projected laser beam 13 on the surface 14 of the metal part 8) is shown as circular (see representative positions 35 of Figure 5), however the laser beam shapes can be realized on the oxide surface 14, as dictated by the operational configuration of the laser head 3 and/or the surface shape of the periphery of the metal part 8 underneath the laser beam 13.

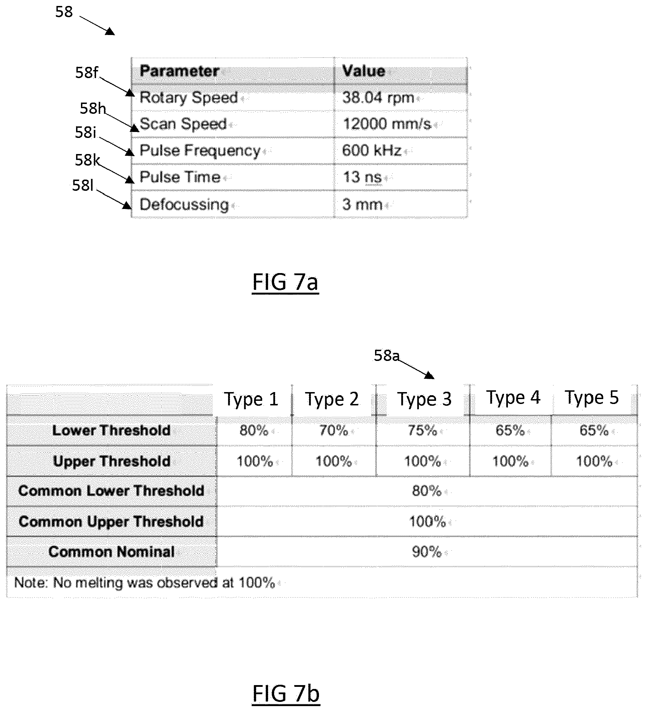

An example of the laser system 10 can be a consisting of Ytterbium fiber Laser beam source 1, processing head 3 with internal focal position adjustment (as controlled by the control system 11), and laser light cable 2. The laser light is transferred to the laser optics 3 from the source 1 via a fiber optic cable (e.g. laser light cable 2). Further, the laser head can consist of three (3) main components, namely internal collimator and focus optics (not shown) for projecting the laser beam 13 onto the exterior surface 14, a laser scanning head and a 330 mm-focus lens (not shown) for directing the laser beam 13 along the predefined paths 32,33. Example parameters 58 are shown in Figure 7a.

In operation of the laser system 10, in conjunction with the rotary system 5, cleaning process, it is recognised that one embodiment is such that the control system 11 is configured to provide the laser scan head 3 is moved a single laser beam 13 point at a (e.g. constant) linear speed from the front (adjacent to the hard stop 58e position) of the metal part 8 (e.g. tube) to the end of a clean distance (e.g. scan length 58b) as the metal part 8 is rotated at a (e.g. constant) rotational speed in selected direction(s) 30 until the entire periphery of the exterior surface 14 (e.g. circumference of the metal tube as one example of the metal part 8) had been cleaned (i.e. a selected non-ablated portion 42 - e.g. the periphery of the metal part 8 along the scan length 58b has been transformed into the ablated portion 40), once the oxide layer 22 therein has been ablated (e.g. appreciably removed from the surface 21 of the metal part 10).

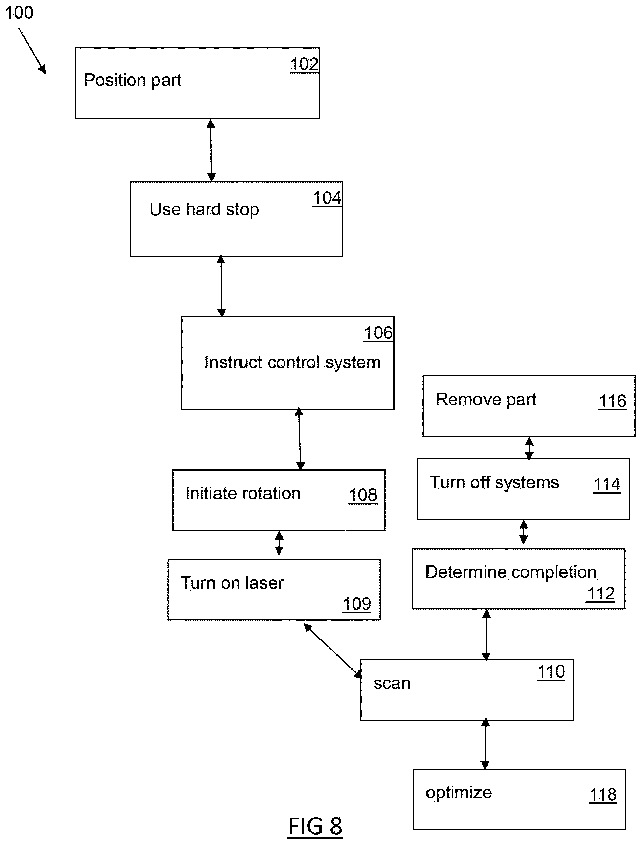

For example, referring to Figure 8, shown is an example operation 100 of the laser system 10 in conjunction with the rotary system 5 and the control system 11, i.e. cleaning process. At step 102, position metal part 8 into the rotary chuck 6 of the rotary system 5; use 104 the hard stop 58e (e.g. locate the metal part 8 with respect to the laser system coordinate frame X-Y) to datum the metal part 8 and lock in place via the rotary chuck 6; instruct 106 the control system 10 (e.g. by a position sensor noting that a door - not shown - associated with a workstation of the table 4 is closed - thus isolating the metal part 8 cleaning process from the surrounding environment); initiate 108 rotation of the metal part 8 and the laser head 3 turns on 109 to produce the laser beam 13; scan 110 the laser head 3 along each successive path 32,33 as metal part 8 rotates, by incorporating the positioning 35 of the laser bean 13 to accommodate overlaps 36, 38 as discussed above; determine 112 that the metal part 8 has completed a full rotation, thus providing for the desired ablation portion 40; turn off 114 the laser source 1 and rotary system 5; and remove 116 metal part 8, now considered cleaned of the oxide layer 22.

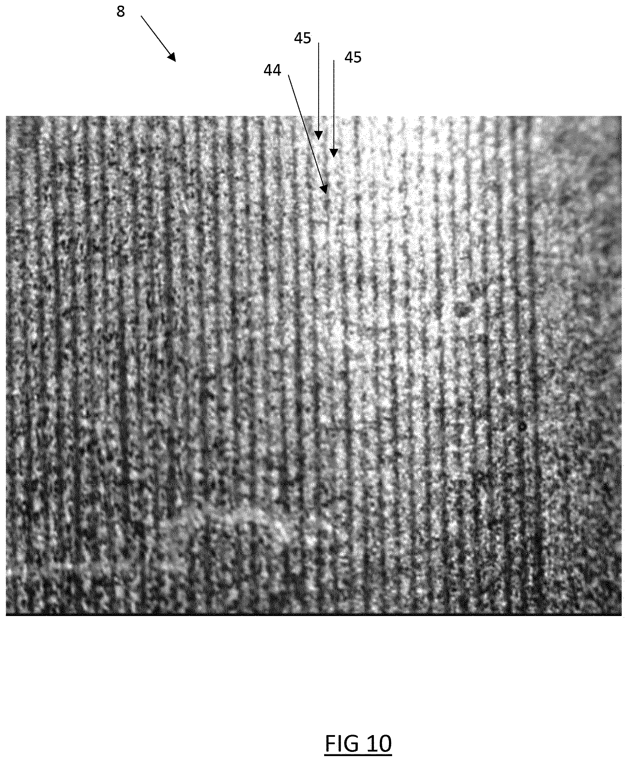

Further, the laser subsystem 10 can be operated by the control system 11 in order to vary the performance of the cleaning of the metal part 8, in order to optimize (see step 118 of Figure 8) the cleaning results. For example, after the rotary speed 58f and other parameters 58 (pulse frequency, pulse on time, defocusing, etc.) were established, the power level setting 58j was varied. The power level 58j was, for example, the last factor 58 to determine/adjust, in order to attain the desired ablation results of the oxide layer 22 while at the same time providing for the inhibiting base metal 20 ablation, additional oxide layer 22 formation, and/or changing of one or more material properties of the base metal 20. For example, power level 58j is a variable 58 that can diminish slightly over time as the laser system 10 is operated for extended periods of time and/or operational cycles. Patterns of 20-mm long cleaned length sections 40 were created on tubes 8, using varying average laser power level 58j settings (e.g. from 50% to 100%, in 5% increments). "Banded" parts (as shown in Figure 10) were created for each variant of oxidized tubes 8, when the power level 58j was suboptimal. As such, the power level 58j was selected as the level at which the tube 8 was not being acceptably cleaned (lower threshold of the power lever 58j) and the power level at which the tube experienced melting of the base metal 20 (upper threshold of the power lever 58j). As such, the parameters can include a range of power level 58j for each of the types 58a of the metal parts 8. Further, it is recognised that the vary parameter step 118 can be performed for any one of the parameters 58. Further, it is recognised that the vary parameter step 118 can be performed for any selected group of the parameters 58.

It is recognised that the laser system 10 can have a vision system 9 (e.g. a visual detection system) calibrated to detect: the presence of ablated base metal 20 (e.g. evidenced by a change in reflectivity and/or color change of the part surface 20, such that ablated base metal 20 is more reflective and non-colored that non-ablated base metal 20 - see Figures 12a,b,c); and / or the presence of non-ablated oxide layer 22 portions 42 and/or sub portions 44. It is also recognized that this visual inspection of the processed metal part 8 can be performed manually by an operator of the system 10,5, for example using additional measuring instruments (e.g. including the human eye).

In this manner, the vision system 6 can be used as an input to the control system 11 in order to optimize the selection (e.g. variance) of the parameter 58 values as the control system 11 subjects the metal part 8 to the cleaning process (e.g. see Figure 8). Figure 7b provides a summary of the upper and lower threshold for each individual color group, e.g. type 58a of metal part 8 with oxide layer 22, as well as the common threshold and common nominal setting for the power level 58j.

Referring to Figure 10, optimized cycle time for effecting the appropriate completed cleaning of the metal part 8 was done in conjunction with the control system 11 by increasing the speed at which the laser beam 13 point travels across the workpiece 8. This was accomplished by maximizing the laser head 3 scan speed 58h and compensating with the rotary axis' rotary speed 58f, such that the parameters 58h, 58f are dependent upon one another in order to generate the laser power per location/position 35 that meets the defined power density threshold. For example, a scan head 3 was used to provide a maximum scan speed 58h (e.g. 10,000 -13000 mm/s). The rotary speed 58f was then adjusted to provide there were no gaps 44 between two (e.g. parallel) laser paths 32, 33 (see Figure 10 below showing undesirable presence of gaps 44, thus demonstrating the undesirable presence of non-ablated sub portions/gaps 44 between adjacent ablated sub portions 45).

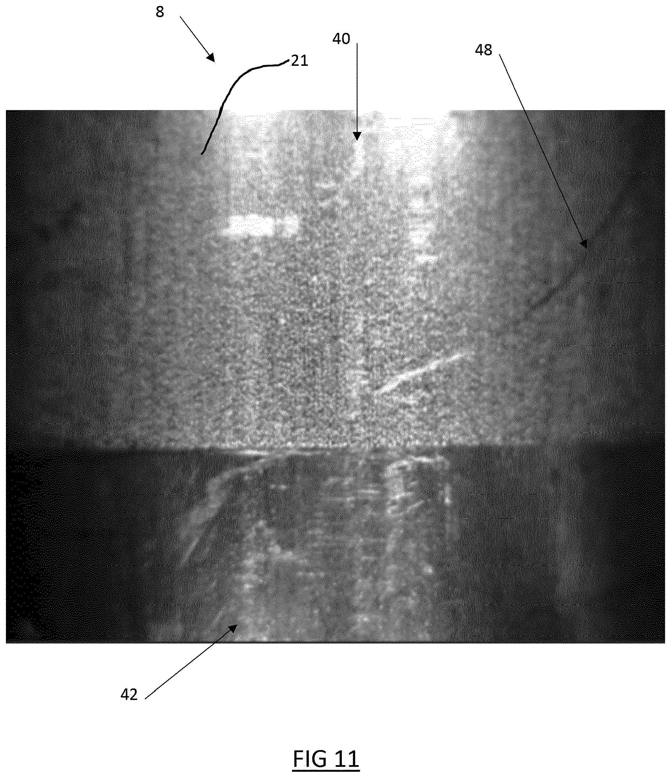

Referring to Figure 11, shown is a metal part 8 having an absence of gaps 44, thus providing for the ablated region 40 uninterrupted with the presence of metal oxide (i.e. the oxide layer 22 had been removed from the ablated region 40). It is also recognised that surface texture 48 (e.g. a scratch such as an indent or projection of the surface 21) remains after cleaning. As such, the parameters 58 are optimized for removing the oxide layer 22 while inhibiting the ablation of the base metal 20 (which would remove the surface texture 48). Figures 12a,b,c (not to sale) show the presence and absence of surface texture 48 in association with undesirable ablation of the base metal 20, of the metal part 8 having a hollow interior 8a with surface texture 48 of the external surface 21 of the base metal 20. Figure 12b shows a desired ablation of the oxide layer with minimal to no ablation of the surface texture 48, while Figure 12c shows a completely or otherwise substantially ablated base metal 20 resulting in loss of surface texture 48. It is recognised that the reflectivity (i.e. reflectiveness of light directed against the surface 21, or otherwise color - e.g. grey vs blue) would make the exterior surface 21 in Figure 12c appear greater (i.e. shinier) than the exterior surface 21 in Figure 12b. This difference in reflectivity of the exterior surfaces 21 can be determined or otherwise measured by the vision system 9 and/ or manually by an operator of the systems 10,5, as desired.

Referring again to Figure 6, the control system infrastructure 54 can includes one or more computer processors 58a and can include an associated memory 52. The computer processor 58a facilitates performance of the control system 11 configured for the intended task (e.g. of the respective operation of any of the systems 9,10,5 as described) through operation of a communication interface 51, a user interface 49 and other application programs/hardware by executing task related instructions. These task related instructions (e.g. associated with the parameters 58 as defined) can be provided by an operating system, and/or software applications located in the memory 52, and/or by operability that is configured into the electronic/digital circuitry of the processor(s) 58a designed to perform the specific task(s). Further, it is recognized that the device infrastructure 54 can include a computer readable storage medium coupled to the processor 58a for providing instructions to the processor 58 and/or to load/update the instructions 57. The computer readable medium can include hardware and/or software such as, by way of example only, magnetic disks, magnetic tape, optically readable medium such as CD/DVD ROMS, and memory cards. In each case, the computer readable medium may take the form of a small disk, floppy diskette, cassette, hard disk drive, solid-state memory card, or RAM provided in the memory module. It should be noted that the above listed example computer readable mediums can be used either alone or in combination.

It is recognised that the device infrastructure 54 is utilized to execute the system(s) 9,10,5, as desired, in order to implement the operation 100 of Figure 8. Further, it is recognized that the control system 11 can include the executable applications comprising code or machine readable instructions 57 for implementing predetermined functions/operations including those of an operating system and the systems 9,10,5, for example. The processor 58a as used herein is a configured device and/or set of machine-readable instructions for performing operations as described by example above, including those operations as performed by any or all of the systems 9,10,5. As used herein, the processor 58a can comprise any one or combination of, hardware, firmware, and/or software. The processor 58a acts upon information by manipulating, analyzing, modifying, converting or transmitting information for use by an executable procedure or an information device, and/or by routing the information with respect to an output device. The processor 58a can use or comprise the capabilities of a controller or microprocessor, for example. Accordingly, any of the functionality of the systems 9,10,5 may be implemented in hardware, software or a combination of both. Accordingly, the use of a processor 58a as a device and/or as a set of machine-readable instructions is hereafter referred to generically as a processor/module 58a for sake of simplicity.

Only the basic principles and characteristics are described in the above embodiments, and is not limited to the above embodiments. Various modifications and changes may be made without departing from the spirit and scope of the present. These modifications and changes fall into the scope claimed to be protected. The scope to be protected is defined by the appended claims and equivalents thereof.

## Claims

**1.** A system for cleaning an oxide layer from an exterior surface of a base metal of a metal part, the system comprising:
a laser system for projecting a laser beam onto an oxide surface of the oxide layer, the oxide layer formed on the exterior surface;
a rotary system for rotating the metal part about an axis, the rotary system having a holder for holding the metal part adjacent to the laser system; and
a control system for controlling a plurality of parameters for facilitating an ablation of the oxide layer from the exterior surface as the metal part is rotated about the axis by the rotary system.

**2.** The system of claim 1, wherein the plurality of parameters includes a rotational speed of the metal part performed by the rotary system and a power level of the laser beam.

**3.** The system of claim 1 further comprising the control system configured for controlling scanning of the laser beam on a plurality of paths along the axis, as the metal part rotates.

**4.** The system of claim 3, wherein the plurality of parameters includes parameters of the laser system selected from the group consisting of: scan speed, pulse frequency; and defocus.

**5.** The system of claim 3, wherein two or more of the plurality of parameters collectively define an overlap between adjacent positions of the laser beam on the same path of the plurality of paths.

**6.** The system of claim 3, wherein two or more of the plurality of parameters collectively define an overlap between adjacent positions of the laser beam on different paths of the plurality of paths.

**7.** The system of claim 1, wherein said rotating is at a constant rate.

**8.** The system of claim 3, wherein said scanning is performed at a constant scan rate along the plurality of paths.

**8.** The system of claim 1 further comprising the exterior surface having a texture formed by the base metal.

**9.** The system of claim 8, wherein the texture comprises at least one of indents or projections in the exterior surface.

**10.** The system of claim 8, wherein values of the plurality of parameters are selected such that removal of the oxide layer is facilitated while ablation of the base metal is inhibited.

**11.** The system of claim 10, wherein a power level parameter of the plurality of parameters is adjusted in order to provide for said ablation of the base metal is inhibited.

**12.** The system of claim 10, wherein a power level parameter of the plurality of parameters is adjusted in order to inhibit causing a change in a material property of the base metal.

**13.** The system of claim 11, wherein the power level parameter is selected in order to provide for a vaporization threshold within a predefined range.

**14.** The system of claim 1 further comprising measuring a reflectivity of the cleaned metal part in order to test for ablation of the base metal.

**15.** The system of claim 1, wherein a distance of the exterior surface from the axis is substantially constant.

**16.** The system of claim 1, wherein a cross sectional shape of the metal part is circular.

**17.** A method for cleaning an oxide layer from an exterior surface of a base metal of a metal part, the method comprising:
mounting a metal part in a rotary system, the rotary system positioned adjacent to a laser system and having a holder for holding the metal part, the laser system for projecting a laser beam onto an oxide surface of the oxide layer, the oxide layer formed on the exterior surface;
instructing the rotary system to rotate the metal part about an axis; and
controlling a plurality of parameters in order to ablate the oxide layer from the exterior surface as the metal part is rotated about the axis by the rotary system.

**18.** The method of claim 16 further comprising inspecting a reflectivity of the metal part after performing said ablate the oxide layer.
